# EUROPEAN PATENT SPECIFICATION

(11) **EP 3 432 628 B1**
(45) Date of publication and mention of the grant of the patent: **01.04.2020**
(21) Application number: 17181970.9
(22) Date of filing: 18.07.2017
(51) Int. Cl.: H04W 12/08, H04W 12/02, H04W 4/00, H04W 84/18

(54) **SECURE DEVICES AND METHODS FOR LPWA COMMUNICATION NETWORKS**
SICHERE VORRICHTUNGEN UND VERFAHREN FÜR LPWA-KOMMUNIKATIONSNETZWERKE
DISPOSITIF DE COMMUNICATION ET PROCÉDÉ DE COMMUNICATION RADIO

(43) Date of publication of application: 23.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- US-B1- 8 458 800
- US-B2- 9 307 409
- TSAO R ALEXANDER COOPER POWER SYSTEMS M DOHLER CTTC V DAZA A LOZANO UNIVERSITAT POMPEU FABRA T: "A Security Threat Analysis for Routing over Low-Power and Lossy Networks; draft-ietf-roll-security-threats-03.txt", A SECURITY THREAT ANALYSIS FOR ROUTING OVER LOW-POWER AND LOSSY NETWORKS; DRAFT-IETF-ROLL-SECURITY-THREATS-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 26 June 2013 (2013-06-26), pages 1-48, XP015094881, [retrieved on 2013-06-26]

## Description

### TECHNICAL FIELD

In general, the invention relates to wireless communication networks. More specifically, the invention relates to secure devices, methods and systems for wireless communication networks based on Low-Power Wide-Area (LPWA) technology, in particular narrowband loT communication networks.

### BACKGROUND

Narrowband loT (NB loT) is a new technology standard, designed to broaden the future of loT connectivity. Ratified by the 3GPP, NB loT is starting to being deployed by mobile network operators across the globe. NB loT is a Low-Power Wide-Area (LPWA) network technology, developed to enable efficient communication for mass distributed NB loT communication devices across wide geographical footprints as well in scenarios with deep indoor penetration, e.g. within an urban infrastructure. It's ideal for devices that generate low data traffic, rely on batteries and typically have a long device life cycle. A battery life of more than 10 years can be supported for a wide range of use cases. Moreover, NB loT significantly improves the system capacity and spectrum efficiency, especially in deep coverage. Thus, NB loT can be used to connect simple communication devices, such as sensors, to drive new data streams, reduce operational costs and create new business models. Smart Meters, Smart Bins, environmental monitoring and precision agriculture are just a few applications of NB loT. Such devices are also referred to as NB loT cellular devices. More information about NB loT can be found in the 3GPP technical report TR 45.820.

Due to the generally limited hardware resources of a communication device based on LPWA technology and, in particular, NB loT technology, security mechanisms known, for instance, from smart phones cannot be used for such a communication device. Thus, there is a need for improved devices, methods and systems for wireless communication networks based on LPWA technology, in particular narrowband loT networks.

Tsao et al: "A Security Threat Analysis for Routing over Low-Power and Lossy Networks" provides a security threat analysis for routing over low-power and lossy networks (LLN), including defining and evaluating security threats, describing appropriate countermeasures as well as providing security recommendations for incorporation into LLN routing protocols.

US 9 307 409 B2 discloses a configurable multimode wireless radio transceiver supporting different radio access technologies. The multimode wireless radio transceiver implements different protection domains comprising different radio configuration parameters. The wireless radio transceiver comprises a protection domain controller (PDC) for controlling the different protection domains. The PDC can define the access rights of a configuration software to one or more of the protection domains for configuring the radio configuration parameters stored therein.

US 8 458 800 B1 discloses a secure smart phone that is adapted, through software modifications only, to provide multiple operating domains or domains that provide differing levels of security and reliability. Each operating domain is isolated from the others.

### SUMMARY OF THE INVENTION

It is an object of the invention to provide improved devices, methods and systems for wireless communication networks based on LPWA technology, in particular narrowband IOT networks.

The foregoing and other objects are achieved by the subject matter of the independent claims. Further implementation forms are apparent from the dependent claims, the description and the figures.

Embodiments of the present invention relate to communication devices that use NB loT technology. Although the description is written by using the NB loT as the access technology, the embodiments are applicable also for communication devices that use other wireless communication technologies as well, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system. As used herein, NB loT technology can comprises, for instance, narrowband LTE, narrowband M2M, and narrowband OFDMA techniques.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention a communication device may include a processor. The processor may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor control unit may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

In embodiments of the present invention, the communication device can be a wearable device, a sensor, small device, a mobile device, and/or any other device, which may be, for example, powered by a battery and/or any other power source having a limited capacity.

In embodiments of the present invention, the communication device can be configured to communicate over one or more narrowband channels, for example, channels with a channel bandwidth of about 200 Kilohertz (KHz). In embodiments of the invention a minimum system bandwidth of 200 kHz on both downlink and uplink can be used. In each direction, the 200 kHz channel can be divided into narrow bandwidth subcarriers, for instance, 48 on the downlink and 36 on the uplink. In the downlink direction, Orthogonal Frequency Division Multiple Access (OFDMA) can be used. In the uplink direction Frequency Division Multiple Access (FDMA) can be used.

More specifically, according to a first aspect the invention relates to a communication device for communicating data over a low power wide area, LPWA, communication network as disclosed by claim 1.

Thus, an improved communication device for wireless communication networks based on LPWA technology, in particular narrowband IOT networks, is provided.

The security system can be implemented in hardware and/or software. In an embodiment, the security system can be implemented using virtualization techniques. In a further possible embodiment of the communication device the processor, the memory and the radio are implemented as a system on a chip. In a further possible embodiment the communication device further comprises a communication bus, wherein the communication bus is configured to exchange data between the processor, the memory and the radio.

In a further possible implementation form of the communication device according to the first aspect, the operation of the communication device depends on one or more control parameters, wherein the control parameters are defined by the monitoring and/or control function.

In a further possible implementation form of the communication device according to the first aspect, the processor security domain of the first set of security domains is configured to control the operation of the communication device by adjusting the one or more control parameters defined by the monitoring and/or control function.

In a further possible implementation form of the communication device according to the first aspect, the communication device further comprises an electrical power storage, in particular an electrical battery, for powering the communication device, wherein the processor security domain of the first set of security domains is configured to adjust the one or more control parameters defined by the monitoring and/or control function as a function of a status of the electrical power storage, in particular the remaining electrical power of the electrical power storage.

In a further possible implementation form of the communication device according to the first aspect, the one or more control parameters defined by the monitoring and/or control function comprise a control parameter defining a frequency or a frequency band used by the radio for transmitting and/or receiving data over the LPWA communication network.

In a further possible implementation form of the communication device according to the first aspect, the processor security domain of the first set of security domains is configured to adjust the monitoring and/or control function in response to an adjustment request from a remote network entity of the LPWA communication network.

In a further possible implementation form of the communication device according to the first aspect, the processor security domain of the first set of security domains is configured to verify a digital signature associated with the adjustment request and to adjust the monitoring and/or control function according to the adjustment request, in case the digital signature has been verified.

In a further possible implementation form of the communication device according to the first aspect, the processor security domain of the first set of security domains is configured to verify the digital signature associated with the adjustment request on the basis of a public key stored in the memory security domain of the first set of security domains.

In a further possible implementation form of the communication device according to the first aspect, the processor security domain of the first set of security domains is configured to monitor the operation of the communication device on the basis of the monitoring and/or control function by detecting an anomalous behaviour of the real-time execution environment.

In a further possible implementation of the communication device according to the first aspect, the memory comprises in addition to the respective memory security domains of the one or more sets of security domains a real-time memory portion that is configured to be accessible from the real-time execution environment and the respective processor security domains of the one or more sets of security domains.

In a further possible implementation of the communication device according to the first aspect, the memory comprises a RAM, a ROM and/or a Flash memory.

In a further possible implementation form of the communication device according to the first aspect, the processor security domain of the first set of security domains is configured to monitor the operation of the communication device on the basis of the monitoring and/or control function by detecting an anomalous behaviour of the radio. In a further possible implementation of the communication device according to the first aspect, the processor security domain of the first set of security domains can be configured to restrict access to the radio for transmitting and/or receiving data to one or more selected sets of security domains.

In a further possible implementation form of the communication device according to the first aspect, the communication device further comprises an actuator, wherein the processor security domain of the first set of security domains is configured to monitor the operation of the communication device on the basis of the monitoring and/or control function by detecting an anomalous behaviour of the actuator. In a further possible implementation of the communication device according to the first aspect, the processor security domain of the first set of security domains can be configured to restrict access to the actuator to one or more selected sets of security domains.

In a further possible implementation form of the communication device according to the first aspect, the communication device further comprises a sensor configured to collect data on the basis of a given calibration, wherein the processor security domain of the first set of security domains is configured to control the operation of the communication device on the basis of the monitoring and/or control function by adjusting the calibration of the sensor. In a further possible implementation of the communication device according to the first aspect, the processor security domain of the first set of security domains can be configured to restrict access to the sensor and/or the sensor data to one or more selected sets of security domains.

According to a second aspect a corresponding method of operating a communication device for communicating data over a low power wide area, LPWA, communication network according to claim 13.

Thus, an improved communication method for wireless communication networks based on LPWA technology, in particular narrowband IOT networks, is provided.

The method according to the second aspect of the invention can be performed by the communication device according to the first aspect of the invention and its different embodiments. Thus, further features of the method according to the second aspect of the invention result directly from the functionality of the communication device according to the first aspect of the invention and its different embodiments and implementation forms.

According to a third aspect the invention relates to a computer program product comprising program code for performing the method according to the second aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a NB loT communication network comprising a communication device according to an embodiment;
Fig. 2 shows a more detailed schematic diagram of a communication device according to an embodiment; and
Fig. 3 shows a diagram illustrating a method for operating a communication device according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

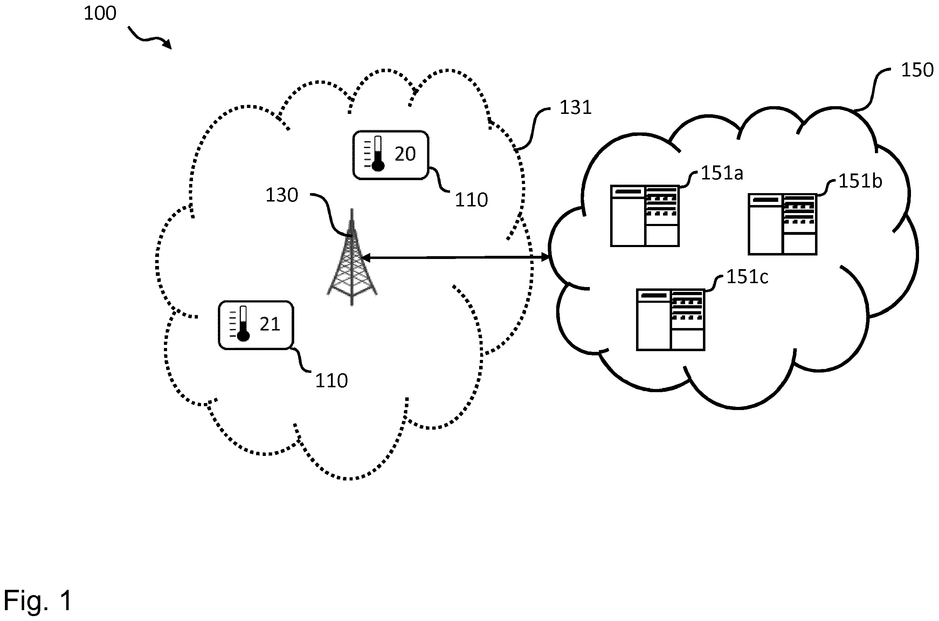

Figure 1 shows a schematic diagram of a cellular communication network 100. The cellular communication network 100 is a low-power wide-area (LPWA) communication network 100, in particular a LPWA communication network 100 based on narrowband (NB) loT technology, as described, for instance, in the 3GPP technical report TR 45.820.

The cellular communication network 100 comprises a radio access network 131, a core network 150 and a plurality of NB loT communication devices 110. In the exemplary embodiment shown in figure 1, the plurality of NB loT communication devices are smart temperature sensors configured to monitor temperature data and to provide the temperature data via the core network 150 of the NB loT communication network 100 to one or more remote network entities 151a, 151b, in particular network servers, configured to collect and analyze the temperature data from the plurality of NB loT communication devices 110.

For the sake of clarity figure 1 shows only a single exemplary base station 130, which is part of the radio access network 131. In other embodiments the radio access network 131 can comprises a plurality of base stations similar to the exemplary base station 130 shown in figure 1.

The core network 150 comprises entities or functions for operating the NB loT communication network 100. In the exemplary embodiment, shown in figure 1 the core network 150 comprises an authentication entity 151c configured to perform an authentication procedure with each of the NB loT communication devices 110 before granting full access to the NB loT communication network 100.

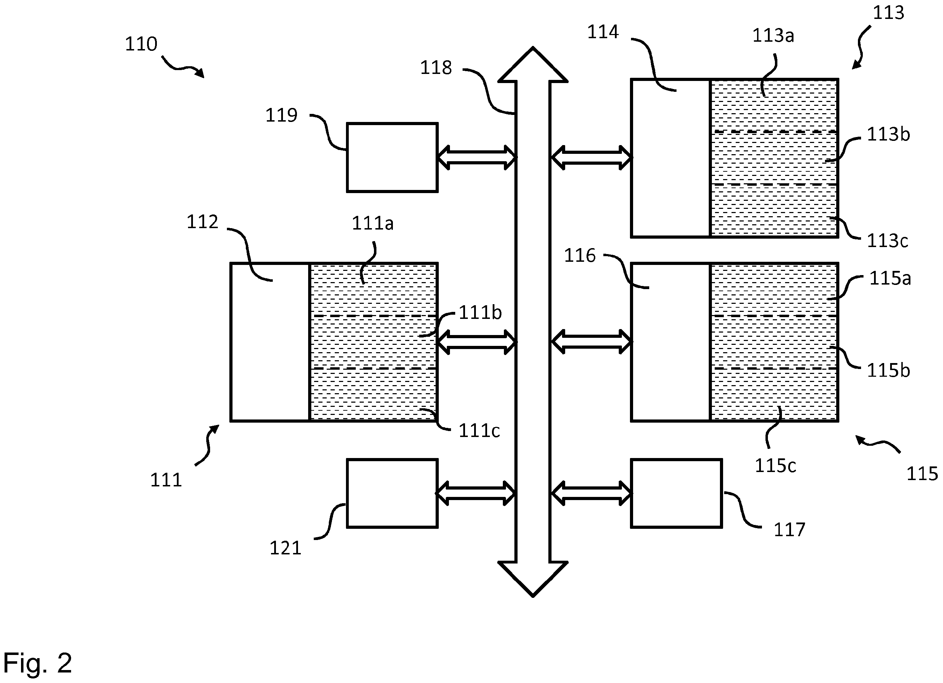

Under further reference to figure 2 in the following an embodiment of the NB loT communication device 110 will be described. The communication device 110 comprises a processor 111 configured to process data and running applications, a memory comprising a RAM 113 and a Flash memory 115 configured to store volatile and non-volatile data (in particular executable application code), respectively, and a radio 117 configured to transmit and/or receive data over the NB loT communication network 100. In an embodiment, the radio 117 can be configured to use one or more subcarriers of a channel bandwidth of about 200 Kilohertz (KHz) to communicate with the base station 130 on the basis of an OFDMA scheme in the downlink direction and on the basis of a FDMA scheme in the uplink direction. Alternatively to or in addition to the Flash memory 115 the communication device 110a can comprise a ROM as well.

In an embodiment, the processor 111, the RAM 113, the Flash memory 115 and/or the radio 117 can be implemented as a system on a chip. As illustrated in figure 2, in an embodiment the communication device 110a further comprises a communication bus system 118 configured to provide for the flow of data between the processor 111, the RAM 113, the Flash memory 115 and the radio 117.

The communication device 110 further comprises a security system configured to operate one or more logically separated sets of security domains 111a-c, 113a-c, 115a-c, including a first set of security domains 111a, 113a, 115a, on the processor 111 and the memory, i.e. the volatile RAM 113 and the non-volatile Flash memory 115, wherein each set of security domains comprises a processor security domain 111a-c and a memory security domain 113a-c, 115a-c. In the exemplary embodiment shown in figure 2 the security system comprises three sets of logically separated security domains 111a-c, 113a-c, 115a-c, namely the first set of security domains 111a, 113a, 115a, comprising a processor security domain 111a, a RAM security domain 113a and a Flash memory security domain 115a, and a second and a third set of security domains 111b,c, 113b,c, 115b,c, comprising a respective processor security domain 111b,c, a respective RAM security domain 113b,c and a respective Flash memory security domain 115b,c. As already mentioned, the respective security domains of a set of security domains, for instance, the processor security domain 111a, the RAM security domain 113a and the Flash memory security domain 115a of the first set of security domains are logically separated from the security domains of the other sets of security domains.

The processor security domain 111a of the first set of security domains 111a, 113a, 115a is configured to implement a monitoring and/or control function such that the processor security domain 111a of the first set of security domains 111a, 113a, 115a is configured to monitor and/or control the operation of the communication device 110 on the basis of the monitoring and/or control function. In an embodiment, the operation of the communication device 110 can depend on one or more control parameters, wherein the control parameters are defined by the monitoring and/or control function. In an embodiment, the processor security domain 111a of the first set of security domains 111a, 113a, 115a is configured to control the operation of the communication device 110 by adjusting the one or more control parameters defined by the monitoring and/or control function.

In an embodiment, the communication device 110 further comprises an electrical power storage, in particular an electrical battery (not shown in figure 2), for powering the communication device 110. In an embodiment, the processor security domain 111a of the first set of security domains 111a, 113a, 115a is configured to adjust the one or more control parameters defined by the monitoring and/or control function as a function of a status of the electrical power storage in particular the remaining electrical power of the electrical power storage.

In an embodiment, the one or more control parameters defined by the monitoring and/or control function comprise a control parameter defining a frequency or a frequency band used by the radio 117 for transmitting and/or receiving data over the LPWA communication network 100. Thus, in an embodiment, the processor security domain 111a of the first set of security domains 111a, 113a, 115a is configured to adjust the control parameter defining a frequency or a frequency band used by the radio 117 for transmitting and/or receiving data over the LPWA communication network 100 as a function of the remaining electrical power of the electrical power storage. For instance, the processor security domain 111a of the first set of security domains 111a, 113a, 115a could be configured to reduce the frequency used by the radio 117 on the basis of the monitoring and/or control function, in case the remaining electrical power of the electrical power storage is smaller than a predefined threshold value, in order to reduce the electrical power consumption by the radio 117.

In an embodiment, the processor security domain 111a of the first set of security domains is configured to adjust the monitoring and/or control function in response to an adjustment request from a remote network entity of the LPWA communication network 100, such as the network entities 151a or 151b shown in figure 1. In an embodiment, the processor security domain 111a of the first set of security domains 111a, 113a, 115a is configured to verify a digital signature associated with the adjustment request and to adjust the monitoring and/or control function, only in case the digital signature has been verified. To this end, the processor security domain 111a of the first set of security domains 111a, 113a, 115a can be configured to verify the digital signature associated with the adjustment request on the basis of a public key stored in the memory security domain 113a, 115a of the first set of security domains 111a, 113a, 115a. As will be appreciated, this public key for verifying the signed adjustment requests corresponds to a private key used, for instance by the network entity 151a or 151b shown in figure 1, for digitally signing the adjustment request. In an embodiment, the adjustment request including the signature can be transmitted in an encrypted form from the remote network entity 151a, b to the communication device 110.

As can be taken from the embodiment shown in figure 2, the processor 111 can be configured to implement a real-time execution environment 112 based on a real-time operating system, wherein the security system is configured to operate the respective processor security domains 111a-c of the one or more sets of security domains 111a-c, 113a-c, 115a-c in parallel to the real-time execution environment 112. Thus, generally it is not possible to access the one or more sets of security domains 111a-c, 113a-c, 115a-c from the real-time execution environment 112.

In an embodiment, the processor security domain 111a of the first set of security domains 111a, 113a, 115a can be configured to monitor the operation of the communication device 110 on the basis of the monitoring and/or control function by detecting an anomalous behaviour of the real-time execution environment 112. As used herein, an anomalous behaviour is defined as a behaviour that does not correspond to one of aplurality of expected (i.e. possible) behaviours within predefined tolerances. If an anomalous behaviour is detected by the processor security domain 111a of the first set of security domains 111a, 113a, 115a, the processor security domain 111a can trigger appropriate counter measures, such as reporting the anomaly to the operator of the LPWA network 110 and the like. For detecting an anomalous behaviour the processor security domain 111a of the first set of security domains 111a, 113a, 115a on the basis of the monitoring and/or control function could intermittently trigger an integrity verification of the real-time execution environment 112.

In an embodiment, the processor security domain 111a of the first set of security domains 111a, 113a, 115a is configured to monitor the operation of the communication device 110 on the basis of the monitoring and/or control function by detecting an anomalous behaviour of the radio 117. In an embodiment, the processor security domain 111a of the first set of security domains 111a, 113a, 115a can be configured to restrict access to the radio 117 for transmitting and/or receiving data to one or more selected sets of the other sets of security domains 111b,c, 113b,c, 115b,c. For instance, the processor security domain 111a of the first set of security domains 111a, 113a, 115a can be configured to restrict access to the radio 117 for transmitting and/or receiving data to the second set of security domains 111b, 113b, 115b. An anomalous behaviour of the radio 117 could be, for instance, transmitting an amount of data being larger than a predefined threshold, transmitting data more often than expected (such as once every hour instead of once every weak), numerous repetitions of failed communication requests and the like.

As can be taken from the embodiment shown in figure 2, the communication device 110 can further comprise an actuator 121, wherein the processor security domain 111a of the first set of security domains 111a, 113a, 115a is configured to monitor the operation of the communication device 110 on the basis of the monitoring and/or control function by detecting an anomalous behaviour of the actuator 121. In an embodiment, the processor security domain 111a of the first set of security domains 111a, 113a, 115a can be configured to restrict access to the actuator 121 to one or more selected sets of the other sets of security domains 111b,c, 113b,c, 115b,c. For instance, the processor security domain 111a of the first set of security domains 111a, 113a, 115a can be configured to restrict access to the actuator 121 to the second set of security domains 111b, 113b, 115b.

As already mentioned above and as shown in figure 2, the communication device 110 can further comprise a sensor 119 configured to collect data on the basis of a given calibration. In an embodiment, the processor security domain 111a of the first set of security domains 111a, 113a, 115a is configured to control the operation of the communication device 110 on the basis of the monitoring and/or control function by adjusting the calibration of the sensor 119. In an embodiment, the processor security domain 111a of the first set of security domains 111a, 113a, 115a can be configured to restrict access to the sensor and/or the sensor data to one or more selected sets of the other sets of security domains 111b,c, 113b,c, 115b,c. For instance, the processor security domain 111a of the first set of security domains 111a, 113a, 115a can be configured to restrict access to the sensor 119 and/or the data collected by the sensor 119 to the second set of security domains 111b, 113b, 115b.

In an embodiment, the first set of security domains 111a, 113a, 115a is further configured to authenticate the communication device 110 within the NB loT communication network 100 in an authentication procedure with the authentication entity 151c. To this end, a cryptographic authentication key can be stored in the Flash memory security domain 115a of the first set of security domains 111a, 113a, 115 and the processor security domain 111a can be configured to run an authentication application for authenticating the communication device 110 using the cryptographic authentication key.

The security system of the communication device 110 shown in figure 2 can be implemented in hardware and/or software. In an embodiment, the security system can be implemented using virtualization techniques. In an embodiment, the different RAM security domains 113a-c can be provided by different partitions of the RAM 113. In an embodiment, the data in the different RAM security domains 113a-c are accessible using "memory mapped I/O". As will be appreciated, the main purpose of the security system of the communication device 110a and its security domains is to isolate the processing of security critical tasks from standard processing in the real-time execution environment 112. This can be achieved by using a single processor-core having two execution modes, one secure mode and another mode for standard processes. In this case the RAM and registers assigned to the single core are duplicated and one set is assigned to the normal mode, i.e. the real-time execution environment 112, and the other set to the secure execution mode, i.e. the secure execution environment. According to another embodiment, the security system of the communication device 110a and its security domains can be implemented using a multi-processor-core architecture with at least one secure-core with an own RAM, which is dedicated to executing only security-critical processes.

In an embodiment, both the RAM 113 and the Flash memory 115 can comprise in addition to the respective RAM security domains 113a-c and the Flash memory security domains 115a-c a real-time RAM portion 114 and a real-time Flash memory portion 116, which can be accessed from the real-time execution environment 112 of the processor 111 and the respective processor security domains 111a-c of the three sets of security domains.

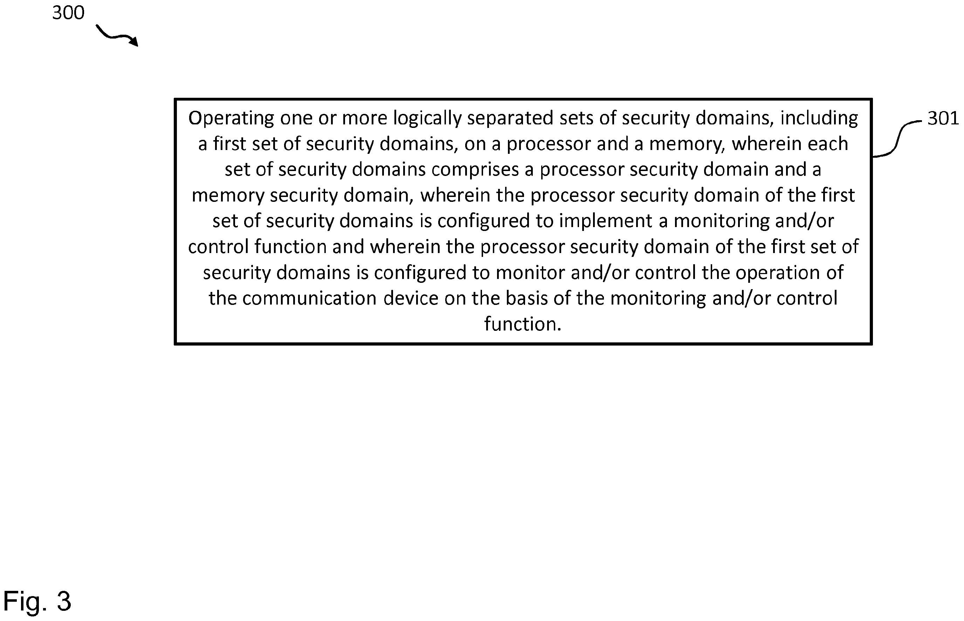

Figure 3 shows a corresponding method 300 of operating the communication device 110 for communicating data over the LPWA communication network 100. The method 300 comprises the step 301 of operating the one or more logically separated sets of security domains 111a-c, 113a-c, 115a-c, including the first set of security domains 111a, 113a, 115a, on the processor 111 and the memory 113, 115, wherein each set of security domains comprises a processor security domain 111a-c and a memory security domain 113a-c, 115a-c, wherein the processor security domain 111a of the first set of security domains 111a, 113a, 115a is configured to implement a monitoring and/or control function and wherein the processor security domain 111a of the first set of security domains 111a, 113a, 115a is configured to monitor and/or control the operation of the communication device (110) on the basis of the monitoring and/or control function.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention, as defined by the appended claims.

## Claims

1. A communication device (110) for communicating data over a low power wide area, LPWA, communication network (100), wherein the communication device (110) comprises:
a processor (111) configured to process data;
a memory (113, 115) configured to store data;
a radio (117) configured to transmit and receive data over the LPWA communication network (100); and
a security system configured to operate one or more logically separated sets of security domains (111 a-c, 113a-c, 115a-c), including a first set of security domains (111a, 113a, 115a), on the processor (111) and the memory (113, 115), wherein each set of security domains comprises a processor security domain (111a-c) and a memory security domain (113a-c, 115a-c), wherein the processor security domain (111a) of the first set of security domains (111a, 113a, 115a) is configured to implement a monitoring and control function and wherein the processor security domain (111a) of the first set of security domains (111a, 113a, 115a) is configured to monitor and control the operation of the communication device (110) on the basis of the monitoring and control function, wherein the processor (111) is configured to implement a real-time execution environment (112) based on a real-time operating system and wherein the security system is configured to operate the respective processor security domains (111a-c) of the one or more sets of security domains (111a-c, 113a-c, 115a-c) in parallel to the real-time execution environment (112).

2. The communication device (100) of claim 1, wherein the operation of the communication device (110) depends on one or more control parameters, wherein the control parameters are defined by the monitoring and control function.

3. The communication device (110) of claim 2, wherein the processor security domain (111a) of the first set of security domains (111a, 113a, 115a) is configured to control the operation of the communication device (110) by adjusting the one or more control parameters defined by the monitoring and control function.

4. The communication device (110) of claim 3, wherein the communication device (110) further comprises an electrical power storage, in particular an electrical battery, for powering the communication device (110) and wherein the processor security domain (111a) of the first set of security domains (111a, 113a, 115a) is configured to adjust the one or more control parameters defined by the monitoring and control function as a function of a status of the electrical power storage.

5. The communication device (110) of any one of claims 2 to 4, wherein the one or more control parameters defined by the monitoring and control function comprise a control parameter defining a frequency or a frequency band used by the radio (117) for transmitting and receiving data over the LPWA communication network (100).

6. The communication device (110) of any one of the preceding claims, wherein the processor security domain (111a) of the first set of security domains (111a, 113a, 115a) is configured to adjust the monitoring and control function in response to an adjustment request from a remote network entity (151a,b) of the LPWA communication network (100).

7. The communication device (110) of claim 6, wherein the processor security domain (111a) of the first set of security domains (111a, 113a, 1 15a) is configured to verify a digital signature associated with the adjustment request and to adjust the monitoring and control function according to the adjustment request, in case the digital signature has been verified.

8. The communication device (110) of claim 7, wherein the processor security domain (111a) of the first set of security domains (111a, 113a, 115a) is configured to verify the digital signature associated with the adjustment request on the basis of a public key stored in the memory security domain (113a, 115a) of the first set of security domains (111a, 113a, 115a).

9. The communication device (110) of any one of the preceding claims, wherein the processor security domain (111a) of the first set of security domains (111a, 113a, 115a) is configured to monitor the operation of the communication device (110) on the basis of the monitoring and control function by detecting an anomalous behaviour of the real-time execution environment (112).

10. The communication device (110) of any one of the preceding claims, wherein the processor security domain (111a) of the first set of security domains (111a, 113a, 115a) is configured to monitor the operation of the communication device (110) on the basis of the monitoring and control function by detecting an anomalous behaviour of the radio (117).

11. The communication device (110) of any one of the preceding claims, wherein the communication device (110) further comprises an actuator (121) and wherein the processor security domain (111a) of the first set of security domains (111a, 113a, 115a) is configured to monitor the operation of the communication device (110) on the basis of the monitoring and control function by detecting an anomalous behaviour of the actuator (121).

12. The communication device (110) of claim any one of the preceding claims, wherein the communication device (110) further comprises a sensor (119) configured to collect data on the basis of a given calibration and wherein the processor security domain (111a) of the first set of security domains (111a, 113a, 115a) is configured to control the operation of the communication device (110) on the basis of the monitoring and control function by adjusting the calibration of the sensor (119).

13. A method (300) of operating a communication device (110) for communicating data over a low power wide area, LPWA, communication network (100), wherein the communication device (110) comprising a processor (111) which processes data; a memory (113, 115) that stores data; and a radio (117) that transmits and receives data over the LPWA communication network (100), wherein the method (300) comprises:
operating (301) one or more logically separated sets of security domains (111a-c, 113a-c, 115a-c), including a first set of security domains (111a, 113a, 115a), on the processor (111) and the memory (113, 115), wherein each set of security domains comprises a processor security domain (111a-c) and a memory security domain (113a-c, 115a-c), wherein the processor security domain (111a) of the first set of security domains (111a, 113a, 115a) is configured to implement a monitoring and control function and wherein the processor security domain (111a) of the first set of security domains (111a, 113a, 115a) monitors and controls the operation of the communication device (110) on the basis of the monitoring and/or control function, wherein a real-time execution environment (112) is implemented on the processor (111) based on a real-time operating system and wherein the security system operates the respective processor security domains (111a-c) of the one or more sets of security domains (111a-c, 113a-c, 115a-c) in parallel to the real-time execution environment (112).

14. A computer program product comprising program code for performing the method (300) of claim 13, when executed on a computer or a processor.

## Patentansprüche

1. Kommunikationsvorrichtung (110) zum Übermitteln von Daten über ein Low-Power-Wide-Area(LPWA)-Kommunikationsnetzwerk (100), wobei die Kommunikationsvorrichtung (110) Folgendes umfasst:
einen Prozessor (111), der dafür ausgelegt ist, Daten zu verarbeiten;
einen Speicher (113, 115), der dafür ausgelegt ist, Daten zu speichern;
eine Funkeinrichtung (117), die dafür ausgelegt ist, über das LPWA-Kommunikationsnetzwerk (100) Daten zu senden und zu empfangen; und
ein Sicherheitssystem, das dafür ausgelegt ist, einen oder mehrere logisch abgetrennte Sätze von Sicherheitsdomänen (111a-c, 113a-c, 115a-c), einschließlich eines ersten Satzes von Sicherheitsdomänen (111a, 113a, 115a), auf dem Prozessor (111) und dem Speicher (113, 115) zu betreiben, wobei jeder Satz von Sicherheitsdomänen eine Prozessorsicherheitsdomäne (llla-c) und eine Speichersicherheitsdomäne (113a-c, 115a-c) umfasst, wobei die Prozessorsicherheitsdomäne (111a) des ersten Satzes von Sicherheitsdomänen (111a, 113a, 115a) dafür ausgelegt ist, eine Überwachungs- und Steuerungsfunktion zu implementieren, und wobei die Prozessorsicherheitsdomäne (111a) des ersten Satzes von Sicherheitsdomänen (111a, 113a, 115a) dafür ausgelegt ist, den Betrieb der Kommunikationsvorrichtung (110) auf der Grundlage der Überwachungs- und Steuerungsfunktion zu überwachen und zu steuern, wobei der Prozessor (111) dafür ausgelegt ist, eine Echtzeit-Ausführungsumgebung (112) basierend auf einem Echtzeit-Betriebssystem zu implementieren, und wobei das Sicherheitssystem dafür ausgelegt ist, die jeweiligen Prozessorsicherheitsdomänen (llla-c) des einen oder der mehreren Sätze von Sicherheitsdomänen (111a-c, 113a-c, 115a-c) parallel zu der Echtzeit-Ausführungsumgebung (112) zu betreiben.

2. Kommunikationsvorrichtung (100) nach Anspruch 1, wobei der Betrieb der Kommunikationsvorrichtung (110) von einem oder mehreren Steuerungsparametern abhängt, wobei die Steuerungsparameter durch die Überwachungs- und Steuerungsfunktion definiert werden.

3. Kommunikationsvorrichtung (110) nach Anspruch 2, wobei die Prozessorsicherheitsdomäne (111a) des ersten Satzes von Sicherheitsdomänen (111a, 113a, 115a) dafür ausgelegt ist, den Betrieb der Kommunikationsvorrichtung (110) durch Anpassen des einen oder der mehreren Steuerungsparameter, die durch die Überwachungs- und Steuerungsfunktion definiert werden, zu steuern.

4. Kommunikationsvorrichtung (110) nach Anspruch 3, wobei die Kommunikationsvorrichtung (110) ferner einen elektrischen Energiespeicher, insbesondere eine elektrische Batterie, zum Speisen der Kommunikationsvorrichtung (110) umfasst, und wobei die Prozessorsicherheitsdomäne (111a) des ersten Satzes von Sicherheitsdomänen (111a, 113a, 115a) dafür ausgelegt ist, den einen oder die mehreren Steuerungsparameter, die durch die Überwachungs- und Steuerungsfunktion definiert werden, in Abhängigkeit von einem Status des elektrischen Energiespeichers anzupassen.

5. Kommunikationsvorrichtung (110) nach einem der Ansprüche 2 bis 4, wobei der eine oder die mehreren Steuerungsparameter, die durch die Überwachungs- und Steuerungsfunktion definiert werden, einen Steuerungsparameter umfassen, der eine Frequenz oder ein Frequenzband definiert, die/das von der Funkeinrichtung (117) zum Senden und Empfangen über das LPWA-Kommunikationsnetzwerk (100) verwendet wird.

6. Kommunikationsvorrichtung (110) nach einem der vorhergehenden Ansprüche, wobei die Prozessorsicherheitsdomäne (111a) des ersten Satzes von Sicherheitsdomänen (111a, 113a, 115a) dafür ausgelegt ist, die Überwachungs- und Steuerungsfunktion als Reaktion auf eine Anpassungsanforderung von einer entfernten Netzwerkeinheit (151a,b) des LPWA-Kommunikationsnetzwerks (100) anzupassen.

7. Kommunikationsvorrichtung (110) nach Anspruch 6, wobei die Prozessorsicherheitsdomäne (111a) des ersten Satzes von Sicherheitsdomänen (111a, 113a, 115a) dafür ausgelegt ist, eine digitale Signatur im Zusammenhang mit der Anpassungsanforderung zu verifizieren und, sofern die digitale Signatur verifiziert wurde, die Überwachungs- und Steuerungsfunktion gemäß der Anpassungsanforderung anzupassen.

8. Kommunikationsvorrichtung (110) nach Anspruch 7, wobei die Prozessorsicherheitsdomäne (111a) des ersten Satzes von Sicherheitsdomänen (111a, 113a, 115a) dafür ausgelegt ist, die digitale Signatur im Zusammenhang mit der Anpassungsanforderung auf der Grundlage eines öffentlichen Schlüssels, der in der Speichersicherheitsdomäne (113a, 115a) des ersten Satzes von Sicherheitsdomänen (111a, 113a, 115a) gespeichert ist, zu verifizieren.

9. Kommunikationsvorrichtung (110) nach einem der vorhergehenden Ansprüche, wobei die Prozessorsicherheitsdomäne (111a) des ersten Satzes von Sicherheitsdomänen (111a, 113a, 115a) dafür ausgelegt ist, den Betrieb der Kommunikationsvorrichtung (110) auf der Grundlage der Überwachungs- und Steuerungsfunktion durch Erkennen eines anormalen Verhaltens der Echtzeit-Ausführungsumgebung (112) zu überwachen.

10. Kommunikationsvorrichtung (110) nach einem der vorhergehenden Ansprüche, wobei die Prozessorsicherheitsdomäne (111a) des ersten Satzes von Sicherheitsdomänen (111a, 113a, 115a) dafür ausgelegt ist, den Betrieb der Kommunikationsvorrichtung (110) auf der Grundlage der Überwachungs- und Steuerungsfunktion durch Erkennen eines anormalen Verhaltens der Funkeinrichtung (117) zu überwachen.

11. Kommunikationsvorrichtung (110) nach einem der vorhergehenden Ansprüche, wobei die Kommunikationsvorrichtung (110) ferner einen Aktuator (121) umfasst und wobei die Prozessorsicherheitsdomäne (111a) des ersten Satzes von Sicherheitsdomänen (111a, 113a, 115a) dafür ausgelegt ist, den Betrieb der Kommunikationsvorrichtung (110) auf der Grundlage der Überwachungs- und Steuerungsfunktion durch Erkennen eines anormalen Verhaltens des Aktuators (121) zu überwachen.

12. Kommunikationsvorrichtung (110) nach einem der vorhergehenden Ansprüche, wobei die Kommunikationsvorrichtung (110) ferner einen Sensor (119) umfasst, der dafür ausgelegt ist, auf der Grundlage einer gegebenen Kalibrierung Daten zu sammeln, und wobei die Prozessorsicherheitsdomäne (111a) des ersten Satzes von Sicherheitsdomänen (111a, 113a, 115a) dafür ausgelegt ist, den Betrieb der Kommunikationsvorrichtung (110) auf der Grundlage der Überwachungs- und Steuerungsfunktion durch Anpassen der Kalibrierung des Sensors (119) zu steuern.

13. Verfahren (300) zum Betreiben einer Kommunikationsvorrichtung (110) zum Übermitteln von Daten über ein Low-Power-Wide-Area(LPWA)-Kommunikationsnetzwerk (100), die Kommunikationsvorrichtung (110) umfassend einen Prozessor (111), der Daten verarbeitet; einen Speicher (113, 115), der Daten speichert; und eine Funkeinrichtung (117), die Daten über das LPWA-Kommunikationsnetzwerk (100) sendet und empfängt, wobei das Verfahren (300) Folgendes umfasst:
Betreiben (301) eines oder mehrerer logisch abgetrennter Sätze von Sicherheitsdomänen (111a-c, 113a-c, 115a-c), einschließlich eines ersten Satzes von Sicherheitsdomänen (111a, 113a, 115a), auf dem Prozessor (111) und dem Speicher (113, 115), wobei jeder Satz von Sicherheitsdomänen eine Prozessorsicherheitsdomäne (llla-c) und eine Speichersicherheitsdomäne (113a-c, 115a-c) umfasst, wobei die Prozessorsicherheitsdomäne (111a) des ersten Satzes von Sicherheitsdomänen (111a, 113a, 115a) dafür ausgelegt ist, eine Überwachungs- und Steuerungsfunktion zu implementieren, und wobei die Prozessorsicherheitsdomäne (111a) des ersten Satzes von Sicherheitsdomänen (111a, 113a, 115a) den Betrieb der Kommunikationsvorrichtung (110) auf der Grundlage der Überwachungs- und/oder Steuerungsfunktion überwacht und steuert, wobei eine Echtzeit-Ausführungsumgebung (112) basierend auf einem Echtzeit-Betriebssystem auf dem Prozessor (111) implementiert wird und wobei das Sicherheitssystem die jeweiligen Prozessorsicherheitsdomänen (111a-c) des einen oder der mehreren Sätze von Sicherheitsdomänen (111a-c, 113a-c, 115a-c) parallel zu der Echtzeit-Ausführungsumgebung (112) betreibt.

14. Computerprogrammprodukt, umfassend Programmcode zum Durchführen des Verfahrens (300) nach Anspruch 13, wenn dieser auf einem Computer oder einem Prozessor ausgeführt wird.

## Revendications

1. Dispositif de communication (110) pour la communication de données sur un réseau de communication de large zone à faible puissance LPWA (100), ce dispositif de communication (110) comprenant :
un processeur (111) configuré pour traiter des données ;
une mémoire (113, 115) configurée pour sauvegarder des données ;
une radio (117) configurée pour transmettre et recevoir des données sur le réseau de communication LPWA (100) ; et
un système de sécurité configuré pour exploiter un ou plusieurs ensembles logiquement séparés de domaines de sécurité (111a-c, 113a-c, 115a-c), y compris un premier ensemble de domaines de sécurité (111a, 113a, 115a) sur le processeur (111) et la mémoire (113, 115), chaque ensemble de domaines de sécurité comprenant un domaine de sécurité de processeur (llla-c) et un domaine de sécurité de mémoire (113a-c, 115a-c), le domaine de sécurité de processeur (111a) du premier ensemble de domaines de sécurité (111a, 113a, 115a) étant configuré pour mettre en œuvre une fonction de contrôle et de commande et le domaine de sécurité de processeur (111a) du premier ensemble de domaines de sécurité (111a, 113a, 115a) étant configuré pour contrôler et commander le fonctionnement du dispositif de communication (110) sur la base de la fonction de contrôle et de commande, le processeur (111) étant configuré pour mettre en œuvre un environnement d'exécution en temps réel (112) en se basant sur un système d'exploitation en temps réel et le système de sécurité étant configuré pour exploiter les domaines de sécurité de processeur respectifs (llla-c) du ou des plusieurs ensembles de domaines de sécurité (111a, 113a, 115a) en parallèle à l'environnement d'exécution en temps réel (112).

2. Dispositif de communication (110) selon la revendication 1, dans lequel le fonctionnement du dispositif de communication (110) dépend d'un ou plusieurs paramètres de commande, les paramètres de commande étant définis par la fonction de contrôle et de commande.

3. Dispositif de communication (110) selon la revendication 2, dans lequel le domaine de sécurité de processeur (111a) du premier ensemble de domaines de sécurité (111a, 113a, 115a) est configuré pour commander le fonctionnement du dispositif de communication (110) en ajustant le ou les plusieurs paramètres de commande définis par la fonction de contrôle et de commande.

4. Dispositif de communication (110) selon la revendication 3, dans lequel le dispositif de communication (110) comprend en outre un système de stockage de courant électrique, en particulier une batterie électrique, pour alimenter le dispositif de communication (110) et le domaine de sécurité de processeur (111a) du premier ensemble de domaines de sécurité (111a, 113a, 115a) est configuré pour ajuster le ou les plusieurs paramètres de commande définis par la fonction de contrôle et de commande en fonction d'un état du système de stockage de courant électrique.

5. Dispositif de communication (110) selon l'une quelconque des revendications 2 à 4, dans lequel le ou les plusieurs paramètres de commande définis par la fonction de contrôle et de commande comprennent un paramètre de commande définissant une fréquence ou une bande de fréquence utilisée par la radio (117) pour transmettre et recevoir des données sur le réseau de communication LPWA (100).

6. Dispositif de communication (110) selon l'une quelconque des revendications précédentes, dans lequel le domaine de sécurité de processeur (111a) du premier ensemble de domaines de sécurité (111a, 113a, 115a) est configuré pour ajuster la fonction de contrôle de commande en réaction à une requête d'ajustement provenant d'une entité de réseau distante (151a,b) du réseau de communication LPWA (100).

7. Dispositif de communication (110) selon la revendication 6, dans lequel le domaine de sécurité de processeur (111a) du premier ensemble de domaines de sécurité (111a, 113a, 115a) est configuré pour vérifier une signature numérique associée à la requête d'ajustement et pour ajuster la fonction de contrôle de commande en fonction de la requête d'ajustement dans le cas où la signature numérique a été vérifiée.

8. Dispositif de communication (110) selon la revendication 7, dans lequel le domaine de sécurité de processeur (111a) du premier ensemble de domaines de sécurité (111a, 113a, 115a) est configuré pour vérifier la signature numérique associée à la requête d'ajustement sur la base d'une clé publique sauvegardée dans le domaine de sécurité de mémoire (113a, 115a) du premier ensemble de domaines de sécurité (111a, 113a, 115a).

9. Dispositif de communication (110) selon l'une quelconque des revendications précédentes, dans lequel le domaine de sécurité de processeur (111a) du premier ensemble de domaines de sécurité (111a, 113a, 115a) est configuré pour contrôler le fonctionnement du dispositif de communication (110) sur la base de la fonction de contrôle de commande en détectant un comportement anormal de l'environnement d'exécution en temps réel (112).

10. Dispositif de communication (110) selon l'une quelconque des revendications précédentes, dans lequel le domaine de sécurité de processeur (111a) du premier ensemble de domaines de sécurité (111a, 113a, 115a) est configuré pour contrôler le fonctionnement du dispositif de communication (110) sur la base de la fonction de contrôle de commande en détectant un comportement anormal de la radio (117).

11. Dispositif de communication (110) selon l'une quelconque des revendications précédentes, dans lequel le dispositif de communication (110) comprend en outre un actionneur (121) et le domaine de sécurité de processeur (111a) du premier ensemble de domaines de sécurité (111a, 113a, 115a) est configuré pour commander le fonctionnement du dispositif de communication (110) sur la base de la fonction de contrôle de commande en détectant un comportement anormal de l'actionneur (121).

12. Dispositif de communication (110) selon l'une quelconque des revendications précédentes, dans lequel le dispositif de communication (110) comprend en outre un capteur (119) configuré pour collecter des données sur la base d'un étalonnage donné et le domaine de sécurité de processeur (111a) du premier ensemble de domaines de sécurité (111a, 113a, 115a) est configuré pour commander le fonctionnement du dispositif de communication (110) sur la base de la fonction de contrôle de commande en ajustant l'étalonnage du capteur (119).

13. Procédé (300) d'exploitation d'un dispositif de communication (110) pour la communication de données sur un réseau de communication de large zone à faible puissance LPWA (100), ce dispositif de communication (110) comprenant un processeur (111) qui traite des données ; une mémoire (113, 115) qui sauvegarde des données ; et une radio (117) qui transmet et reçoit des données sur le réseau de communication LPWA (100), ce procédé (300) comprenant :
l'exploitation (301) d'un ou de plusieurs ensembles logiquement séparés de domaines de sécurité (111a-c, 113a-c, 115a-c), y compris un premier ensemble de domaines de sécurité (111a, 113a, 115a) sur le processeur (111) et la mémoire (113, 115), chaque ensemble de domaines de sécurité comprenant un domaine de sécurité de processeur (llla-c) et un domaine de sécurité de mémoire (113a-c, 115a-c), le domaine de sécurité de processeur (111a) du premier ensemble de domaines de sécurité (111a, 113a, 115a) étant configuré pour mettre en œuvre une fonction de contrôle et de commande et le domaine de sécurité de processeur (111a) du premier ensemble de domaines de sécurité (111a, 113a, 115a) contrôlant et commandant le fonctionnement du dispositif de communication (110) sur la base de la fonction de contrôle et/ou de commande, un environnement d'exécution en temps réel (112) étant mis en œuvre sur le processeur (111) en se basant sur un système d'exploitation en temps réel et le système de sécurité exploitant les domaines de sécurité de processeur respectifs (llla-c) du ou des plusieurs ensembles de domaines de sécurité (111a, 113a, 115a) en parallèle à l'environnement d'exécution en temps réel (112) .

14. Produit de programmation informatique comprenant un code de programme pour réaliser le procédé (300) selon la revendication 13 lorsqu'il est exécuté sur un ordinateur ou un processeur.
